# EUROPÄISCHE PATENTSCHRIFT

(11) **EP 3 646 000 B1**
(45) Veröffentlichungstag und Bekanntmachung des Hinweises auf die Patenterteilung: **31.03.2021**
(21) Anmeldenummer: 18734536.8
(22) Anmeldetag: 26.06.2018
(51) Int. Cl.: G01N 15/06, G01N 1/22, F17C 5/06

(54) **PRÜFVORRICHTUNG ZUM ERMITTELN DER PARTIKELBELASTUNG VON UNTER EINEM HOHEN DRUCK STEHENDEM WASSERSTOFF**
TEST DEVICE FOR DETERMINING THE PARTICLE LOADING OF HIGHLY PRESSURISED HYDROGEN
DISPOSITIF DE TEST POUR DÉTERMINER LA CHARGE EN PARTICULES D'HYDROGÈNE SOUS HAUTE PRESSION

(30) Priorität: 27.06.2017 DE 102017006063
(43) Veröffentlichungstag der Anmeldung: 06.05.2020
(73) Patentinhaber: Hydac Accessories GmbH, 66280 Sulzbach/Saar (DE)
(72) Erfinder: STRUPP, Markus, 66687 Noswendel (DE); SAUER, Stefan Christian, 66773 Schwalbach/Elm (DE)
(74) Vertreter: Bartels, Martin Erich Arthur
(86) Internationale Anmeldenummer: PCT/EP2018/067057
(87) Internationale Veröffentlichungsnummer: WO 2019/002260

(56) Entgegenhaltungen:
- EP-A1- 1 688 731
- WO-A1-2013/139462
- US-A- 3 015 228

## Beschreibung

Die Erfindung betrifft eine Prüfvorrichtung zum Ermitteln der Partikelbelastung von unter einem hohen Druck stehendem Wasserstoff, mit einem Gehäuse, das einen Einlass und einen Auslass für das Einströmen des Wasserstoffs bzw. das Ausströmen desselben sowie eine Probenkammer aufweist, in der eine Filteraufnahme für einen Prüffilter vorgesehen ist, der bei einem Prüfvorgang von einer Probenmenge Wasserstoff durchströmbar und nach Ende des Prüfvorgangs aus der Probenkammer für die Auswertung der Anlagerung von Partikeln herausnehmbar ist, und mit einer einen Druckabbau der Probenkammer ermöglichenden Entlüftungseinrichtung.

Eine Prüfvorrichtung dieser Art ist bekannt, s. WO 2013/139462 A1. Solche Vorrichtungen sind hauptsächlich für eine Anwendung bei Wasserstoff-Betankungssystemen benutzbar, also namentlich bei motorischen Anwendungen, bei denen Wasserstoff als gasförmiger Kraftstoff benutzt wird, oder für die Versorgung von Brennstoffzellen mit Wasserstoff. Bei mit Wasserstoff betriebenen Verbrennungsmotoren, ebenso wie bei Brennstoffzellen, ist es für den störungsfreien Betrieb ausschlaggebend, dass der Wasserstoff von partikulären Fremdstoffen völlig frei ist. Die Prüfung auf Partikelfreiheit leistet daher einen wichtigen Beitrag zur Gewährleistung eines sicheren Betriebs der mit Wasserstoff zu versorgenden Einrichtungen.

Bei der Benutzung der erwähnten, bekannten Prüfvorrichtung wird der Prüfvorgang im Zuge eines Betankungsvorgangs durchgeführt, bei dem der Einlass des Gehäuses der Prüfvorrichtung mit einer H₂-Tankstelle in Verbindung gebracht ist und der Auslass über einen Tankschlauch mit einer Zapfpistole in Verbindung ist, beispielsweise für die Betankung eines Fahrzeugs. Während diesem Vorgang, bei dem über die Zapfpistole die Verbindung zum Tank des Verbrauchers hergestellt ist, ist der in der Probenkammer befindliche Prüffilter von der die Probenmenge bildenden Tankmenge durchströmt. Um nach Beendigung des Tankvorgangs den Prüffilter für die Untersuchung auf Anlagerungen entnehmen zu können, ist die unter dem hohen Betankungsdruck von 800 bar oder höher stehende Probenkammer drucklos zu machen. Hierfür ist bei der erwähnten, bekannten Prüfvorrichtung als Entlüftungseinrichtung ein an der Gehäuseaußenseite befindliches, manuell betätigbares Entlüftungsventil zu öffnen, das einen Ausgangsstutzen aufweist, über den das Gasvolumen zur Umgebung ausbläst, das sich in der Probenkammer sowie im Tankschlauch und in der Verbindung zur H₂-Tankstelle befindet. Diese Verbindungen können nunmehr vom Einlass und vom Auslass des Gehäuses abgenommen werden, so dass das Gehäuse in ein Labor verbracht und geöffnet werden kann, um den Prüffilter auf Anlagerungen zu untersuchen und festgestellte Anlagerungen zu analysieren.

Ausgehend von diesem Stand der Technik stellt sich die Erfindung die Aufgabe, eine Prüfvorrichtung der eingangs genannten Gattung zur Verfügung zu stellen, die sich durch ein besonders sicheres Betriebsverhalten auszeichnet.

Erfindungsgemäß ist diese Aufgabe durch eine Prüfvorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die Entlüftungseinrichtung innerhalb des Gehäuses angeordnet und nach einer Beendigung des Ausströmens von Wasserstoff in der Prüfvorrichtung noch verbliebenen Wasserstoff, zumindest teilweise, in Richtung des Einlasses aus der Prüfvorrichtung abführt. Dadurch erfolgt bei Beendigung des Tankvorgangs der Entlüftungsvorgang automatisch über das Entlüftungssystem, das in den Tankstellen, die für die Hochdruck-Wasserstoffbetankung zugelassen sind, vorgesehen ist. Eine von Hand über ein Ablassventil durchzuführende Entlüftung, bei der in der Umgebung eine gefährliche Wasserstoffatmosphäre entstehen könnte, erübrigt sich daher.

Bei vorteilhaften Ausführungsbeispielen weist die Entlüftungseinrichtung zwei Ventile auf, von denen das erste Ventil den Strömungsweg vom Einlass zum Auslass über den Prüffilter freigibt bei geschlossenem zweiten Ventil, das nach Beendigung des Ausströmens am Auslass unter dem Druck des in der Prüfvorrichtung zurückgebliebenen Wasserstoffs bei einem vorgebbaren Schwellenwert öffnet und dabei die Entlüftung in Richtung des Einlasses vornimmt bei geschlossenem ersten Ventil.

Mit Vorteil können die beiden Ventile aus federbelasteten Rückschlagventilen gebildet sein, von denen das erste Ventil, ausgehend von seiner Schließstellung, in Richtung des Auslasses und das zweite Ventil entgegengesetzt in Richtung des Einlasses öffnet.

Mit Vorteil ist die Anordnung derart getroffen, dass das zweite Ventil im Bypass zum ersten Ventil in einer Verbindungsleitung angeordnet ist, die mit ihrem einen Ende in eine Verbindungstelle zwischen Prüffilter und Auslass und mit ihrem anderen Ende in eine weitere Verbindungsstelle zwischen Einlass und dem ersten Ventil des Strömungswegs einmündet. Bei dieser Anordnung der Verbindungsleitung umgeht der Strömungsweg, der bei geöffnetem zweitem Ventil über die Verbindungsleitung verläuft, den Prüffilter, so dass über diesen kein unerwünschter Rückstrom stattfindet.

Für die Durchführung eines Prüfvorgangs sind der Einlass fluidführend an einen Wasserstoff-Vorratstank, insbesondere bei einer Kraftfahrzeug-Tankstelle, und der Auslass über eine Schlauchleitung an eine Zapfpistole für die Wasserstoffabgabe an ein Fahrzeug anschließbar, so dass eine Entlüftung mittels der Entlüftungseinrichtung nach einem Tank- oder Entnahmevorgang durch ein Entlüftungssystem der Tankstelle automatisch erfolgt.

Das Gehäuse ist bei bevorzugten Ausführungsbeispielen mehrteilig, insbesondere zweiteilig, ausgebildet, wobei die beiden Gehäuseteile mittels einer wieder lösbaren Überwurfmutter miteinander verbunden sind. Für diese kann eine Verdrehsicherung vorgesehen sein, die die Überwurfmutter in der angezogenen Drehstellung lösbar festlegt.

Mit Vorteil können die beiden Ventile in Form von Einbau-Rückschlagventilen in das eine Gehäuseteil aufgenommen sein, das den Einlass aufweist.

Der Prüffilter kann in vorteilhafter Weise zwischen den beiden Gehäuseteilen in der Probenkammer mit der Filteraufnahme festgelegt sein, wobei die Probenkammer an den beiden freien Stirnseiten des Prüffilters jeweils eine konische Erweiterung aufweist, die sich in entgegengesetzten Richtungen vom Prüffilter abgewandt verjüngen und in den Strömungsweg zwischen Einlass und Auslass einmünden.

Zur Bildung eines abgedichteten Übergangs der das zweite Ventil enthaltenden Verbindungsleitung zwischen den beiden Gehäuseteilen kann mit Vorteil in der Verbindungsleitung und zwischen den beiden Gehäuseteilen angeordnet sowie in diese eingreifend ein Verbindungsrohr vorhanden sein, das mittels mindestens eines Dichtelements in abgedichteter Weise im jeweiligen Gehäuseteil geführt ist und die Trennstelle zwischen den beiden Gehäuseteilen durchgreift.

Vorzugsweise sind die Bestandteile der Prüfvorrichtung, einschließlich der eingesetzten Ventile nebst ihren Dichtelementen, aus Edelstahl-Materialien gebildet.

Nachstehend ist die Erfindung anhand eines in der Zeichnung dargestellten Ausführungsbeispiels im Einzelnen erläutert.

Es zeigen:
- Fig. 1: in Symboldarstellung die Fluidschaltung des Ausführungsbeispiels der erfindungsgemäßen Prüfvorrichtung, eingefügt zwischen einer H₂-Tankstelle und einem zu betankenden Kraftfahrzeug;
- Fig. 2: eine perspektivische Schrägansicht des Ausführungsbeispiels, gesehen auf den mit der Tankstelle zu verbindenden Einlass des Vorrichtungsgehäuses;
- Fig. 3: einen Längsschnitt des Ausführungsbeispiels; und
- Fig. 4: einen Längsschnitt des Ausführungsbeispiels mit gegenüber Fig. 3 um 90° verdrehter Schnittebene.

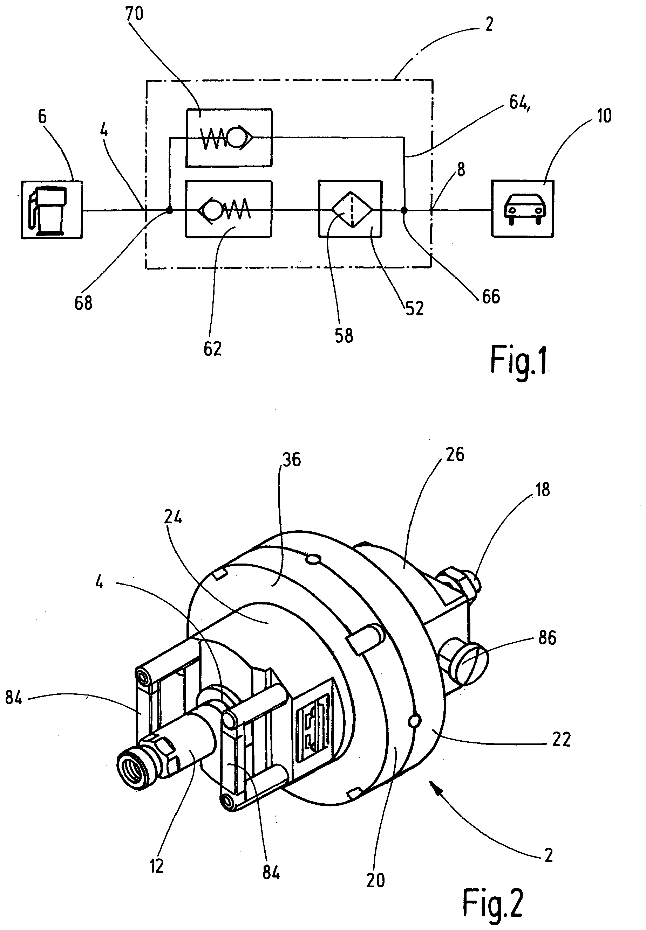

Die schematische Darstellung der Fig. 1 verdeutlicht die Anordnung bei einem im Zuge eines Betankungsvorgangs durchzuführenden Vorgang, bei dem das Vorrichtungsgehäuse 2 mit seinem Einlass 4 mit einer Quelle für unter hohem Druck stehendem Wasserstoff in Form einer H₂-Tankstelle 6 in Verbindung ist und das Gehäuse 2 mit seinem Auslass 8 mit einem zu betankenden Fahrzeug 10 in Verbindung ist. Für die Verbindung mit der Tankstelle 6 weist das Gehäuse 2 am Einlass 4 einen Tanknippel 12 in Form eines in einer mit Innengewinde versehenen Bohrung 14 am Eingang 4 sitzenden Einschraubteils auf. Am gegenüberliegenden Auslass 8 ist mit dem Innengewinde in einer Bohrung 16 ein Anschlussrohr 18 verschraubt, das mit einem ebenfalls nicht gezeigten Tankschlauch verbindbar ist, an dem sich eine Zapfpistole zur Betankung des Fahrzeugs 10 befindet.

Das aus Edelstahl gefertigte Gehäuse 2 weist zwei Gehäuseteile auf, die jedes jeweils ein kreiszylindrisches Flanschteil 20 und 22 aufweisen, die den gleichen Durchmesser aufweisen und an die sich jeweils koaxiale Anschlussteile 24 bzw. 26 anschließen, von denen das Anschlussteil 24 am freien Ende die Bohrung 14 des Einlasses 4 aufweist und das Anschlussteil 26 am äußeren Ende die Bohrung 16 des Einlasses 8 aufweist. Die Anschlussteile 24, 26 haben im großen Ganzen die Form von im Durchmesser gegenüber den Flanschteilen 20, 22 verringerten Kreiszylindern mit einander gegenüberliegenden Abflachungen, siehe Fig. 2. Bei geschlossenem Gehäuse 2 liegen die Flanschteile 20 und 22 an Endflächen 28 und 30 aneinander, die in einer Radialebene liegen. Für die druckfeste und lösbare Aneinanderlage der Endflächen 28, 30 ist eine Überwurfmutter 32 vorgesehen, die auf einem Außengewinde 34 des Flanschteils 22 drehbar ist und ein das andere Flanschteil 20 übergreifendes Ringteil 36 aufweist. Zum Festziehen mittels eines Hakenschlüssels weist die Überwurfmutter 32 radial außenliegende Bohrungen 38 auf. Mittels eines federbelasteten, das Ringteil 36 durchgreifenden Sperrbolzens 40 ist die Überwurfmutter 32 in der festgezogenen Stellung sicherbar.

Für die Zentrierung und gegenseitige Abdichtung der aneinanderliegenden Endflächen 28 und 30 der Flanschteile 20, 22 weist die Endfläche 30 eine konzentrische, axial vorspringende Ringrippe 42 auf, die in eine Ringnut 44 in der anderen Endfläche 30 passend eingreift, wobei ein Dichtring 46 in eine Erweiterung der Ringnut 44 eingesetzt ist. In entsprechender Weise wie bei der erwähnten, aus WO 2013/139462 A1 bekannten Prüfvorrichtung sind von den Endflächen 28 und 30 ausgehend in den Flanschteilen 20 und 22 koaxiale Vertiefungen 48 und 50 ausgebildet, die eine Probenkammer 52 begrenzen. Die Vertiefungen 48, 50 sind, wie bei der genannten, bekannten Vorrichtung, durch je einen Konus mit rechtwinkligem Scheitel gebildet, wobei am Scheitel der Vertiefung 48 ein koaxialer Zuströmkanal 54 einmündet, der über den Einlass 4 mit dem Tanknippel 12 in Verbindung ist. Vom Scheitel der anderen Vertiefung 50 erstreckt sich ein Abströmkanal 56 über den Auslass 8 zum Anschlussrohr 18.

In der Probenkammer 52 befindet sich ein Prüffilter 58 in Form einer blattförmigen, kreisrunden Membran. Dabei kann es sich um ein Papierfilter mit einer Filterfeinheit im Bereich von 0,2 *µ*m oder um eine PTFD-Membran mit laminierter Stützstruktur handeln. Derartige Filter können eine Dicke von 0,15 mm aufweisen. Als Halterung für ein derartiges blattförmiges Element ist als Halterung ein Abstützfilter 60 in Form einer kreisrunden Platte vorgesehen, an deren dem Zuströmkanal 54 zugewandten Seite der Prüffilter 58 anliegt. Die Dicke der Platte des Abstützfilters 60 beträgt beim vorliegenden Beispiel 5 mm, und der Abstützfilter 60 ist aus einem Sintermetall mit einer Porosität gebildet, die einer Filterfeinheit im Bereich von 150 *µ*m entspricht. Die Platte des Abstützfilters 60 ist zwischen der Ringrippe 42 der Endfläche 28 und dem Grund der Ringnut 44 in der Endfläche 30 gehalten.

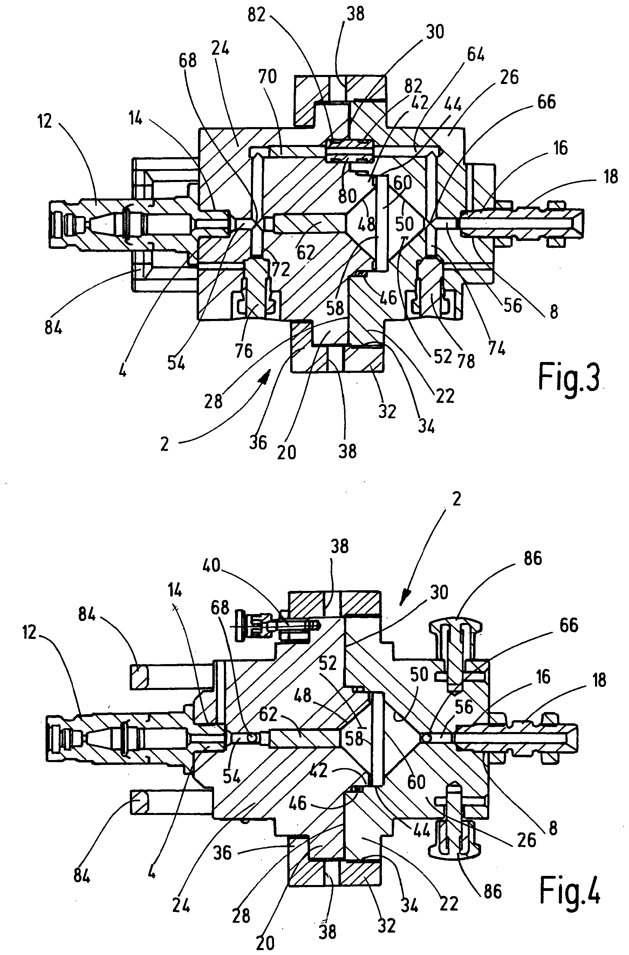

In dem in die Probenkammer 52 einmündenden Endbereich der Zulaufleitung 54 befindet sich ein erstes Ventil in Form eines federbelasteten Rückschlagventils 62, das in Richtung zur Probenkammer 52 öffnet. Als Bypass zum Rückschlagventil 62 ist eine Verbindungsleitung 64 (s. Fig. 3) vorgesehen, die mit ihrem einen Ende in eine Verbindungsstelle 66 zwischen Prüffilter 58 und Auslass 8 einmündet, und mit ihrem anderen Ende in eine Verbindungsstelle 68 zwischen Einlass 4 und dem das erste Ventil bildenden Rückschlagventil 62 einmündet. In dieser Verbindungsleitung 64 ist ein zweites Ventil angeordnet, das ebenfalls als federbelastetes Rückschlagventil 70 ausgebildet ist und in Richtung auf die Verbindungsstelle 68 und damit in Richtung zum Auslass 4 öffnet. Beide Rückschlagventile 62 und 70 sind als Einbau-Rückschlagventile in der sog. Cartridge-Bauweise ausgebildet, wobei ihre sämtlichen Bestandteile aus Edelstahl bestehen. Wie die Fig. 3 zeigt, sind Bohrungen 72 und 74, die die Enden der Verbindungsleitung 64 bilden, durch Gewindestopfen 76 und 78 geschlossen. Wie ebenfalls Fig. 3 zeigt, ist der Übergang der Verbindungsleitung 64 an der zwischen den Endflächen 28 und 30 gebildeten Trennstelle durch ein Verbindungsrohr 80 gebildet, das im jeweiligen Flanschteil 20, 22 durch Dichtelemente 82 abgedichtet ist.

Zur Erleichterung der Handhabung der Prüfvorrichtung zur Durchführung eines Betankungs- und Prüfvorgangs sind am Gehäuse 2 an der Stirnseite des Anschlussteils 24 neben dem Tanknippel 12 Griffleisten 84 vorgesehen. Für den während der Betankung des Fahrzeugs 10 stattfindenden Prüfvorgang wird der Tanknippel 12 an der Füllkupplung der H₂-Tankstelle 6 angeschlossen, und am Anschlussrohr 18 wird ein Tankschlauch mit einer Zapfpistole angebracht. Dabei können am Tankschlauch vorhandene übliche Schlauchbruchsicherungen am Gehäuse 2 mittels Haltebolzen 86 gesichert werden, die vom Anschlussteil 24 seitlich vorstehen und in die Halteösen einhängbar sind. Bei dem nun durchgeführten Betankungsvorgang öffnet das erste Rückschlagventil 62, so dass der Prüffilter 58 durchströmt ist. Das Schließen der Zapfpistole am Ende des Betankungsvorgangs aktiviert das Entlüftungssystem der Tankstelle 6. Der in der Probenkammer 52 und im an den Auslass 8 angeschlossenen Tankschlauch herrschende Wasserstoffdruck schließt das erste Rückschlagventil 62 und öffnet das in der Verbindungsleitung 64 befindliche zweite Rückschlagventil 70, so dass dieses als Entlüftungsventil dient, über das der Druckabbau zum Auslass 4 und dadurch zum Entlüftungssystem der Tankstelle 6 hin erfolgt. Ohne dass eine manuelle Entlüftung über ein Ablassventil erfolgen müsste, kann nunmehr die Prüfvorrichtung abgekuppelt und in einem Labor geöffnet werden, um Ablagerungen auf dem Prüffilter 58 zu analysieren.

## Patentansprüche

1. Prüfvorrichtung zum Ermitteln der Partikelbelastung von unter einem hohen Druck stehendem Wasserstoff, mit einem Gehäuse (2), das einen Einlass (4) und einen Auslass (8) für das Einströmen des Wasserstoffs bzw. das Ausströmen desselben sowie eine Probenkammer (52) aufweist, in der eine Filteraufnahme (44) für einen Prüffilter (58) vorgesehen ist, der bei einem Prüfvorgang von einer Probenmenge Wasserstoff durchströmbar und nach Ende des Prüfvorgangs aus der Probenkammer (52) für die Auswertung der Anlagerung von Partikeln herausnehmbar ist, und mit einer einen Druckabbau der Probenkammer (52) ermöglichenden Entlüftungseinrichtung (64, 70), **dadurch gekennzeichnet, dass** die Entlüftungseinrichtung (64, 70) innerhalb des Gehäuses (2) angeordnet ist und nach einer Beendigung des Ausströmens von Wasserstoff in der Prüfvorrichtung noch verbliebenen Wasserstoff, zumindest teilweise, in Richtung des Einlasses (4) aus der Prüfvorrichtung abführt.

2. Prüfvorrichtung nach Anspruch 1, **dadurch gekennzeichnet, dass** die Entlüftungseinrichtung zwei Ventile (62, 70) aufweist, von denen das erste Ventil (62) den Strömungsweg vom Einlass (4) zum Auslass (8) über den Prüffilter (58) freigibt bei geschlossenem zweiten Ventil (70), das nach Beendigung des Ausströmens am Auslass (8) unter dem Druck des in der Prüfvorrichtung zurückgebliebenen Wasserstoffs bei einem vorgebbaren Schwellenwert öffnet und dabei die Entlüftung in Richtung des Einlasses (4) vornimmt bei geschlossenem erstem Ventil (62).

3. Prüfvorrichtung nach Anspruch 1 oder 2, **dadurch gekennzeichnet, dass** die beiden Ventile aus federbelasteten Rückschlagventilen (62, 70) gebildet sind, von denen das erste Ventil (62), ausgehend von seiner Schließstellung, in Richtung des Auslasses (8) und das zweite Ventil (70) entgegengesetzt in Richtung des Einlasses (4) öffnet.

4. Prüfvorrichtung nach einem der vorstehenden Ansprüche, **dadurch gekennzeichnet, dass** das zweite Ventil (70) im Bypass zum ersten Ventil (62) in einer Verbindungsleitung (64) angeordnet ist, die mit ihrem einen Ende in eine Verbindungsstelle (66) zwischen Prüffilter (58) und Auslass (8) und mit ihrem anderen Ende in eine weitere Verbindungsstelle (68) zwischen Einlass (4) und dem ersten Ventil (62) des Strömungsweges einmündet.

5. Prüfvorrichtung nach einem der vorstehenden Ansprüche, **dadurch gekennzeichnet, dass** der Einlass (4) fluidführend an einen Wasserstoff-Vorratstank, insbesondere bei einer Kraftfahrzeug-Tankstelle (6), und der Auslass (8) über eine Schlauchleitung an eine Zapfpistole für die Wasserstoffabgabe an ein Fahrzeug (10) anschließbar sind und dass eine Entlüftung mittels der Entlüftungseinrichtung (64, 70) nach einem Tank- oder Entnahmevorgang durch ein Entlüftungssystem der Tankstelle (6) automatisch erfolgt.

6. Prüfvorrichtung nach einem der vorstehenden Ansprüche, **dadurch gekennzeichnet, dass** das Gehäuse (2) mehrteilig, insbesondere zweiteilig, ausgebildet ist und dass die beiden Gehäuseteile (20, 22) mittels einer wieder lösbaren Überwurfmutter (32) miteinander verbunden sind.

7. Prüfvorrichtung nach einem der vorstehenden Ansprüche, **dadurch gekennzeichnet, dass** die beiden Ventile in Form von Einbau-Rückschlagventilen (62, 70) in das eine Gehäuseteil (20) aufgenommen sind, das den Einlass (4) aufweist.

8. Prüfvorrichtung nach einem der vorstehenden Ansprüche, **dadurch gekennzeichnet, dass** der Prüffilter (58) zwischen den beiden Gehäuseteilen (20, 22) in der Probenkammer (52) mit der Filteraufnahme (44) festgelegt ist und dass die Probenkammer (52) an den beiden freien Stirnseiten des Prüffilters jeweils eine konische Erweiterung (48, 50) aufweist, die sich in entgegengesetzten Richtungen vom Prüffilter (58) abgewandt verjüngen und in den Strömungsweg zwischen Einlass (4) und Auslass (8) einmünden.

9. Prüfvorrichtung nach einem der vorstehenden Ansprüche, **dadurch gekennzeichnet, dass** in der Verbindungsleitung (64) und zwischen den beiden Gehäuseteilen (20, 22) angeordnet sowie in diese eingreifend ein Verbindungsrohr (80) vorhanden ist, das mittels mindestens eines Dichtelements (82) in abgedichteter Weise im jeweiligen Gehäuseteil (20, 22) geführt ist und die Trennstelle zwischen den beiden Gehäuseteilen (20, 22) durchgreift.

10. Prüfvorrichtung nach einem der vorstehenden Ansprüche, **dadurch gekennzeichnet, dass** ihre Bestandteile, einschließlich der eingesetzten Ventile (62, 70) nebst ihren Dichtelementen, aus Edelstahl-Materialien gebildet sind.

## Claims

1. Test device for determining the particle load of highly pressurised hydrogen, comprising a housing (2), which has an inlet (4) and an outlet (8) for the inflow or outflow of hydrogen, respectively, and a sampling chamber (52), in which a filter holder (44) for a test filter (58) is provided, through which a sample amount of hydrogen can flow during a test operation and which, after the test operation has been completed, can be removed from the sampling chamber (52) to evaluate the deposition of particles, and having a venting apparatus (64, 70) to reduce the pressure in the sampling chamber (52), **characterised in that** the venting apparatus (64, 70) is arranged inside the housing (2) and, after the outflow of hydrogen has stopped, discharges any hydrogen still remaining in the test device, at least partially, in the direction of the inlet (4), from the test device.

2. Test device according to claim 1, **characterised in that** the venting apparatus comprises two valves (62, 70), the first (62) of said valves releasing the flow path from the inlet (4) to the outlet (8) via the test filter (58) when the second valve (70) is closed, the second valve opening at a threshold that can be predefined under the pressure of the hydrogen remaining in the test device after the outflow at the outlet (8) has stopped and in so doing ensuring venting in the direction of the inlet (4) when the first valve (62) is closed.

3. Test device according to either claim 1 or claim 2, **characterised in that** the two valves may be formed of spring-loaded check valves (62, 70), the first (62) of these valves, starting from its closed position, opening in the direction of the outlet (8) and the second valve (70) opening in the opposite direction towards the inlet (4).

4. Test device according to any one of the preceding claims, **characterised in that** the second valve (70) is arranged in a connection line (64) in a bypass to the first valve (62), one end of said connection line leading into a connection point (66) between the test filter (58) and the outlet (8) and the other end of said connection line leading into a further connection point (68) between the inlet (4) and the first valve (62) of the flow path.

5. Test device according to any one of the preceding claims, **characterised in that** the inlet (4) can be connected in a fluid-conducting manner to a hydrogen storage tank, in particular at a fuel filling station (5), and the outlet (8) can be connected via a hose line to a fuel nozzle for delivery of hydrogen to a vehicle (10), and **in that** venting automatically takes place by means of the venting apparatus (64, 70) after a filling or withdrawal operation by a venting system of the filling station (6).

6. Test device according to any one of the preceding claims, **characterised in that** the housing (2) is formed of a plurality of parts, in particular two parts, and **in that** the two housing parts (20, 22) are connected together by means of a detachable union nut (32).

7. Test device according to any one of the preceding claims, **characterised in that** the two valves in the form of integrated check valves (62, 70) are received in the housing part (20) comprising the inlet (4).

8. Test device according to any one of the preceding claims, **characterised in that** the test filter (58) is fixed between the two housing parts (20, 22) in the sampling chamber (52) with the filter holder (44), and **in that** the sampling chamber (52) comprises one conical extension (48, 50) at each of the two free ends of the test filter, which taper in opposite directions away from the test filter (58) and lead into the flow path between the inlet (4) and the outlet (8).

9. Test device according to any one of the preceding claims, **characterised in that** a connecting tube (80) is provided in the connection line (64) and arranged between the two housing parts (20, 22) and engaging therewith, said connecting tube being routed in a sealed manner in the respective housing part (20, 22) by means of at least one sealing element (82) and passing through the separation point between the two housing parts (20, 22).

10. Test device according to any one of the preceding claims, **characterised in that** its components, including the valves (62, 70) used and their sealing elements, are formed from stainless steel materials.

## Revendications

1. Installation de contrôle pour la détermination de la charge en particules d'hydrogène sous haute pression, comprenant une enveloppe (2) qui a une entrée (4) et une sortie (8), pour l'entrée de l'hydrogène ou la sortie de celui-ci, ainsi qu'une chambre (52) à échantillon, dans laquelle est prévue un logement (44) de filtre pour un filtre (58) de contrôle, qui, dans une opération de contrôle, peut être traversé par une quantité d'échantillon d'hydrogène, et, après la fin de l'opération de contrôle, peut être retiré de la chambre (52) à échantillon pour l'exploitation du dépôt de particules, et comprenant un dispositif (64,70) de mise à l'atmosphère permettant une détente de la pression dans la chambre (52) à échantillon, **caractérisée en ce que** le dispositif (64,7) de mise à l'atmosphère est disposé à l'intérieur de l'enveloppe (2) et, après que la sortie de l'hydrogène est achevée, de l'hydrogène resté encore dans l'installation de contrôle est évacué de l'installation de contrôle, au moins en partie, en direction de l'entrée (4).

2. Installation de contrôle suivant la revendication 1, **caractérisée en ce que** le dispositif de mise à l'atmosphère a deux vannes (62, 70) dont la première (62) dégage le trajet d'écoulement de l'entrée (4) à la sortie (8), en passant par le filtre (58) de contrôle, alors que la deuxième vanne (70) est fermée, qui après l'achèvement de la sortie de l'hydrogène resté dans l'installation de contrôle sous pression, s'ouvre à une valeur de seuil pouvant être donnée à l'avance, et effectue ainsi, alors que la première vanne (62) est fermée, la mise en atmosphère en direction de l'entrée (4).

3. Installation de contrôle suivant la revendication 1 ou 2, **caractérisée en ce que** les deux vannes sont formées de clapets (62, 70) antiretour soumis à l'action d'un ressort, dont la première vanne (62) s'ouvre à partir de sa position de fermeture en direction de la sortie (8), et la deuxième vanne (70) en sens contraire en direction de l'entrée (4).

4. Installation de contrôle suivant l'une des revendications précédentes, **caractérisée en ce que** la deuxième vanne (70) est montée en dérivation par rapport à la première vanne (62) dans un conduit (64) de liaison, qui, par l'une de ses extrémités, débouche en un point (66) de liaison entre le filtre (58) de contrôle et la sortie (8) et, par son autre extrémité, débouche en un autre point (68) de liaison entre l'entrée (4) et la première vanne (62) du trajet d'écoulement.

5. Installation de contrôle suivant l'une des revendications précédentes, **caractérisée en ce que** l'entrée (4) peut être raccordée fluidiquement à un réservoir d'hydrogène, notamment dans un point (6) de ravitaillement de véhicule automobile, et la sortie (8) peut être raccordée, par l'intermédiaire d'un conduit souple, à un pistolet de distribution d'hydrogène à un véhicule (10), et **en ce qu'**une mise à l'atmosphère au moyen du dispositif (64, 70) de mise à l'atmosphère s'effectue, après une opération de ravitaillement ou de prélèvement, automatiquement par un système de mise à l'atmosphère du point (6) de ravitaillement.

6. Installation de contrôle suivant l'une des revendications précédentes, **caractérisée en ce que** l'enveloppe (2) est constituée en plusieurs parties, notamment en deux parties, et **en ce que** les deux parties (20, 22) de l'enveloppe sont reliées entre elles au moyen d'un écrou d'accouplement pouvant être redesserré.

7. Installation de contrôle suivant l'une des revendications précédentes, **caractérisée en ce que** les deux vannes sont reçues sous la forme de clapets (62, 70) antiretour à monter dans l'une des parties (20) de l'enveloppe, qui a l'entrée (4) .

8. Installation de contrôle suivant l'une des revendications précédentes, **caractérisée en ce que** le filtre (58) de contrôle est fixé entre les deux parties (20, 22) de l'enveloppe dans la chambre (52) à échantillon ayant le logement (44) pour un filtre, et **en ce que** la chambre (52) à échantillon a, sur les deux côtés frontaux libres du filtre de contrôle, respectivement un élargissement (48,50) conique, qui se rétrécissent dans des sens contraires en s'éloignant du filtre (58) de contrôle, et débouchent dans le trajet d'écoulement entre l'entrée (4) et la sortie (8).

9. Installation de contrôle suivant l'une des revendications précédentes, **caractérisée en ce que**, dans le conduit (64) de liaison et entre les deux parties (20, 22) de l'enveloppe, est disposé ainsi qu'en y pénétrant, un tuyau (6) de liaison, qui est guidé au moyen d'un élément (82) d'étanchéité de façon étanche dans la partie (20, 22) respective de l'enveloppe et pénètre dans le point de séparation entre les deux parties (20, 22) de l'enveloppe.

10. Installation de contrôle suivant l'une des revendications précédentes, **caractérisée** en ses parties constitutives, y compris les vannes (62, 70) utilisées outre leurs éléments d'étanchéité, sont en matériau d'acier fin.
